# EUROPEAN PATENT APPLICATION

(11) **EP 1 909 217 A1**
(43) Date of publication of application: **09.04.2008**
(21) Application number: 06767647.8
(22) Date of filing: 29.06.2006
(51) Int. Cl.: G06K 17/00

(54) **READOUT DATA LENGTH SPECIFICATION METHOD**

(30) Priority: 05.07.2005 JP 2005195901
(71) Applicant: MATSUSHITA ELECTRIC INDUSTRIAL CO., LTD., Osaka 571-8501 (JP)
(72) Inventor: TAKAGI, Nobuya c/o Matsushita Electric Industrial Co., Ltd., Chuo-ku Osaka-shi Osaka 540-6207 (JP)
(74) Representative: Pautex Schneider, Nicole Véronique
(86) International application number: PCT/JP2006/313030
(87) International publication number: WO 2007/004525

(57) **Abstract**

When a terminal specifies an address and a data length to read out data from a file in an IC card, if a response from the IC card has a TLV structure and a field length of L in the TLV structure is variable, there is a possibility that the terminal cannot obtain data of the requested length, and the interoperability might be deteriorated.

With respect to an Le field that specified a maximum length of response data from the IC card, a conversion rule from the data length requested by the terminal into an Le value is shared between the terminal and the IC card. Alternatively, aside from the Le field, the data length requested by the terminal is specified within a data field. Thereby, it is possible to definitely transfer the data length requested by the terminal to the IC card in conformity with a message structure of ISO/IEC7816.

## Description

### TECHNICAL FIELD

The present invention relates to a method for specifying a data length when reading data from a file in an IC card.

### BACKGROUND ART

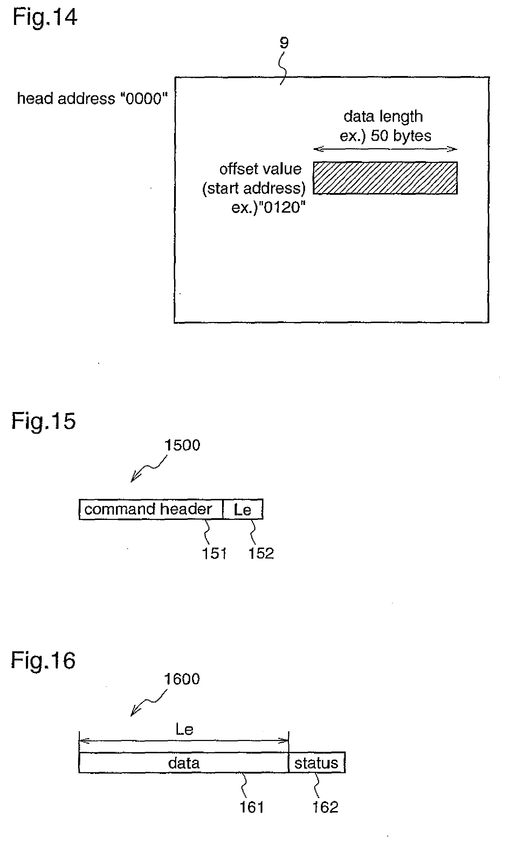

In recent years, IC cards have come into practical use as high security devices to take the place of magnetic cards. An IC card includes a nonvolatile memory, and data in a file format can be stored in the memory. While there are several kinds of files in an IC card, a simplest and most-versatile file is called a transparent file. As shown in figure 14, the transparent file is accessed such that a head address of the file is set to "0", and an offset value from the head address (start address) and a data length are specified.

When performing data reading from the transparent file 9, a normal readout command 1500 to an IC card has a structure shown in figure 15. A command name and a start address from which readout is to be performed are specified in command header 151. Le 152 is provided for specifying how long data is to be requested, in a response that is returned from the IC card in response to the command. In this command, a data length to be read out from the transparent file 9 is set in the Le 152.

A response 1600 to the command 1500 has a structure shown in figure 16. Data 161 is data read from the transparent file 9, and has a length specified by the Le 152 in the command. Status 162 indicates an execution result of the command, and usually information indicating "normal end" is set in the status 162.

Now, the meaning of the Le 152 will be described more specifically. The Le 152 specifies a maximum value of the length that is requested as the response data 161. For example, when an end of the transparent file 9 is reached before the data of the length corresponding to the Le is read out, the IC card reads out the data up to the end of the transparent file 9. In this case, in place of "normal conclusion" being indicated as the status 162, warning information indicating that the reading has reached the end of the transparent file 9 may be returned. Thus, the Le 152 indicates the requested maximum length, and the IC card must not return data of a length that exceeds the Le 152. Conversely, when the data length is within the Le, it satisfies the ISO/IEC standard. When "00" (hexadecimal notation, the same in the following) is specified as a value for the Le 152, it means 256 bytes, and the data 161 up to 256 bytes at maximum can be read out by one command.

Further, although specific explanation will be omitted, when it is desired to read out data having a length exceeding 256 bytes, the Le 152 is represented by 3 bytes. This is called "extended Le". When particularly "000000" (3 bytes) is set as the Le 152, it is possible to read out up to 64 Kbytes (65,536) at maximum.

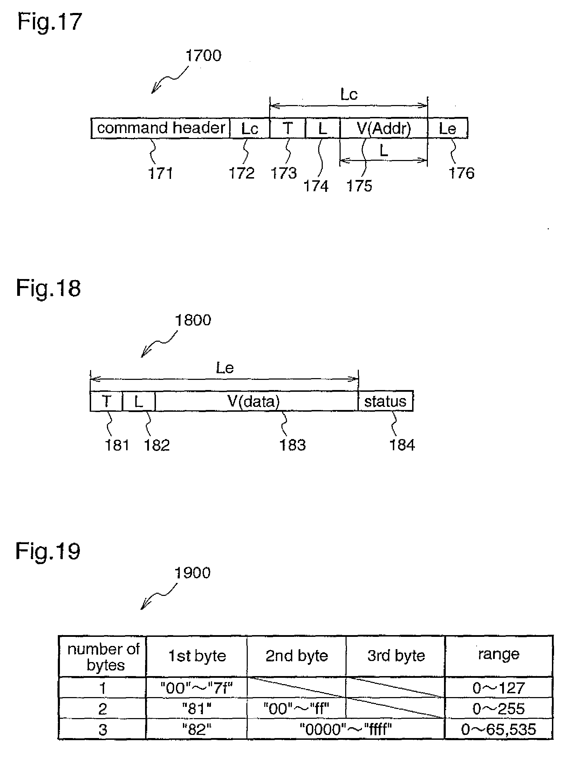

The command header 151 is composed of 4 bytes, and 15 bits among the 4 bytes are used for specifying the start address. Accordingly, address specification up to 32 Kbytes (32,767) at maximum is possible. Recently, the file size tends to increase with broadening of applications of an IC card. In order to handle a transparent file exceeding 32 Kbytes, a command (hereinafter referred to as an extended readout command) that is obtained by extending the function of the above-mentioned command (hereinafter referred to as a normal readout command) is requested. The structure of the extended readout command 1700 is shown in figure 17.

A command name is specified in command header 171. Lc 172 indicates a length of a subsequent TLV object. Generally, the TLV object is composed of three elements, i.e., Tag, Length, and Value ("TLV" is derived from the initial letters of the respective elements). The tag T indicates the type of the object, and the length information L indicates the length of the subsequent value V. Further, the value V is an information body of this object. In this command, a start address Addr that is to be read out is set in the value V 175. A fixed value indicating that this data object specifies the start address is set in the tag T 173. The length information L 174 is variable depending on the length of the value V(Addr) 175. In this construction, if the value V(Addr) 175 is represented by 3 bytes, an address specification up to 16M is possible. Finally, Le 176 indicates a maximum length that is requested as response data, as described above.

A response 1800 to the extended readout command 1700 has a structure shown in figure 18. The response 1800 has also a TLV structure, and the read data is encapsulated as value V 183. A fixed value indicating that this data object is read data is set in tag T 181. Length information L 182 indicates a length of the value V 183, and this is encoded according to the following rule (refer to figure 19).

When the length of the V 183 is within a range from 0 to 127, the L 182 is composed of 1 byte, the most significant bit is set to '0' (binary notation) and the length of the V 183 is represented by the remaining 7 bits. When the length of the V 183 is 128 or more, the L 182 is composed of plural bytes, the most significant bit in the most significant byte is set to '1' (binary notation) and the number of bytes of the subsequent L is represented by the remaining 7 bits. Then, the length of the V 183 is set in the subsequent L. For example, when the L 182 is composed of 3 bytes, it is composed of the most significant byte and the following 2 bytes, and a value "82" is set as the most significant byte while the length of the V 183 is represented by the following 2 bytes. According to this rule, when the L 182 is represented by 1 to 3 bytes, the ranges of the possible lengths of the V 183 are 0~127, 0~255, and 0~65,535, respectively.

The above-mentioned prior arts are specifically described in the following non-patent documents.

Non-patent document 1: ISO/IEC7816-4, First Edition, Section 5.3

Non-patent document 2: ISO/IEC7816-4, Second Edition, Section 7.2

### DISCLOSURE OF THE INVENTION

### PROBLEMS TO BE SOLVED BY THE INVENTION

However, the prior arts have the following drawbacks. Since, as described above, the Le 176 in the extended readout command 1700 is the maximum length of a portion of the response (hereinafter referred to as a data field) excluding the status 184, it includes the lengths of the T 181 and the L 182, and it is not purely the length of the V 183 alone. While the field length of the T 181 is fixed to 1 byte, the field length of L 182 can be represented by any number of bytes from 1 to 3 bytes when the value of the L 182 ranges from 0 to 127 as shown in figure 19, and further, the field length of L 182 can be represented by either of 2 bytes or 3 bytes when the value of the L 182 ranges from 128 to 255. In this way, there is a possibility that the field length of the L 182 is varied depending on the IC card even with the same value of the L 182, and thereby the length of the V 183 itself that is returned as a response would vary. This may results in a possibility that the data length requested by the terminal cannot be obtained, which in turn deteriorates interoperability between the terminal and the IC card might be deteriorated.

### MEASURES TO SOLVE THE PROBLEMS

In order to solve the above-mentioned problems, according to the present invention, there is provided a readout data length specifying method in which a terminal selects a calculation formula from among plural calculation formulae according to a data length to be requested, converts the data length according to the selected calculation formula, and informs the converted value to the IC card, and an IC card selects a calculation formula from among plural calculation formulae that are paired with the respective calculation formulae possessed by the terminal in accordance with the converted value, and calculates the data length from the converted value in accordance with the selected calculation formula. According to this method, since the terminal and the IC card perform the processings in accordance with common rules, data of the length requested by the terminal can be reliably read out.

Further, according to the present invention, there is provided a readout data length specifying method in which a terminal adds a maximum value of a field length of L to a data length that is requested, and informs the added value to the IC card, and an IC card subtracts the maximum value from the added value to derive the data length. According to this method, since the terminal and the IC card perform the processings in accordance with common simple rules, data of the length requested by the terminal can be reliably read out with higher efficiency.

Further, since there is provided a means by which either of the terminal or the IC card informs the maximum value to the other, it becomes unnecessary to fix the maximum value, and thereby it is possible to cope with both a multi-application environment and a future extension in a single application as well.

Further, since there is provided a means by which either of the terminal or the IC card informs, to the other, information identifying which one of a first readout data length specifying method and a second readout data length specifying method is to be applied, it becomes unnecessary to fix the specifying method, and thereby it is possible to cope with both a multi-application environment and a future extension in a single application as well.

Further, according to the present invention, there is provided a readout data length specifying method in which a command from a terminal to an IC card has a first field and a second field, and the terminal specifies a maximum length of a data field of a response from the IC card in the first field, and specifies a requested data length in the second field. According to this method, since the IC card can definitely know the net data length requested by the terminal, data of the length requested by the terminal can be reliably read out. Further, in this method, since all the necessary information in the form of commands are explicitly transferred from the terminal to the IC card, it is possible to cope with both a multi-application environment and a future extension in a single application as well.

Furthermore, when the data stored in the file of the IC card has a first TLV structure and the response from the IC card has a second TLV structure having a format including the data of the first TLV structure nested therein, an accumulated value of the L in the first TLV structure is specified in the second field. According to this method, the terminal can request the total sum of the net data lengths without being conscious of whether the length information of each TLV object in the file in the IC card is extended or not, whereby data of the length requested by the terminal can be reliably read out.

Further, when the file has a vacant area, the IC card skips reading of the vacant area before generating a response, resulting in efficient transmission.

### EFFECTS OF THE INVENTION

According to the above-mentioned measures, since the terminal and the IC card perform the processings in accordance with common rules, data of the length requested by the terminal can be reliably read out, thereby ensuring the interoperability. Further, implicit understandings between the terminal and the IC card are removed, and necessary responses to a multi-application envelopment and a future extension in a single application are carried out. Moreover, it is possible to cope with a case where data stored in a file in the IC card has a TLV structure.

### BRIEF DESCRIPTION OF THE DRAWINGS

Figure 1 is a block diagram illustrating an IC card system according to a first embodiment of the present invention.
Figure 2 is a process flow chart of a command assembly unit 4 in a terminal 1 according to the first embodiment.
Figure 3 is a diagram for explaining a conversion rule according to the first embodiment.
Figure 4 is a diagram illustrating the structures of responses 400a, 400b, and 400c to an extended readout command 1700 according to the first embodiment.
Figure 5 is a process flow chart of a command analysis unit 10 in an IC card 2 according to the first embodiment.
Figure 6 is a diagram illustrating a structure of an extended readout command 600 according to a third embodiment.
Figure 7 is a diagram illustrating a structure of an extended readout command according to a fourth embodiment.
Figure 8 is a diagram illustrating a structure of an extended readout command according to a fifth embodiment.
Figure 9 is a block diagram illustrating a structure of a transparent file according to a sixth embodiment.
Figure 10 is a diagram illustrating a structure of a response to an extended readout command according to the sixth embodiment.
Figure 11 is a diagram illustrating a structure of a transparent file according to a seventh embodiment.
Figure 12 is a diagram illustrating a structure of a response to an extended readout command according to the seventh embodiment.
Figure 13 is a process flow chart of a response assembly unit according to the seventh embodiment.
Figure 14 is a diagram illustrating a structure of a transparent file of a general IC card.
Figure 15 is a diagram illustrating a structure of a general normal readout command 1500.
Figure 16 is a diagram illustrating a structure of a response 1600 to the general normal readout command 1500.
Figure 17 is a diagram illustrating a structure of a general extended readout command 1700.
Figure 18 is a diagram illustrating a structure of a response 1800 to the general extended readout command 1700.
Figure 19 is a diagram for explaining a coding rule relating to length information of a general TLV structure.

### DESCRIPTION OF REFERENCE NUMERALS

- 1: terminal
- 2: IC card
- 3: upper application
- 4: command assembly unit
- 5: Lv/Le conversion unit
- 6: response analysis unit
- 8: command processing unit
- 9: transparent file
- 10: command analysis unit
- 11: Le/Lv conversion unit
- 12: response assembly unit

### BEST MODE TO EXECUTE THE INVENTION

Hereinafter, embodiments of the present invention will be described with reference to the drawings.

### (Embodiment 1)

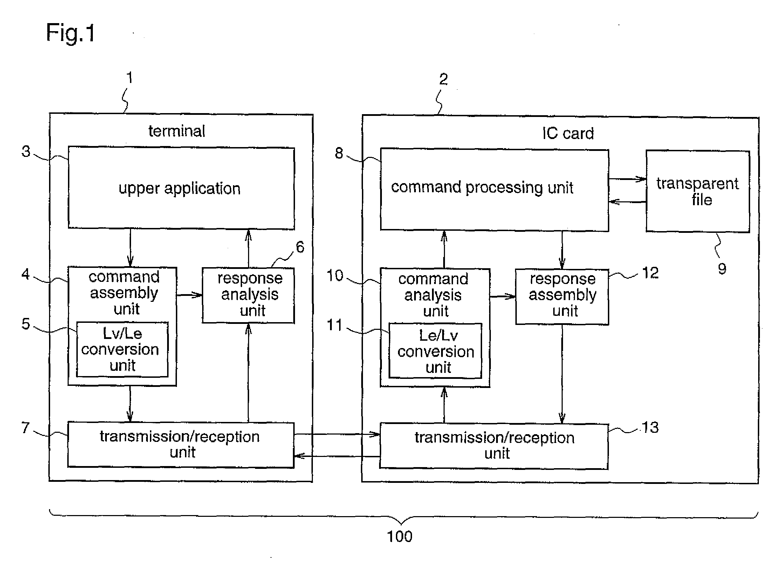

Figure 1 is a diagram illustrating the construction of an IC card system 100 which executes a readout data length specifying method according to a first embodiment of the present invention.

In figure 1, 1 denotes a terminal, and 2 denotes an IC card. In the terminal 1, 3 denotes an upper application, 4 denotes a command assembly unit, 5 denotes an Lv/Le conversion unit, 6 denotes a response analysis unit, and 7 denotes a transmission/reception unit. Further, in the IC card 2, 8 denotes a command processing unit, 9 denotes a transparent file, 10 denotes a command analysis unit, 11 denotes an Le/Lv conversion unit, 12 denotes a response assembly unit, and 13 denotes a transmission/reception unit.

In the IC card system 100 shown in figure 1, the upper application 3 in the terminal 1 gives a start address and a data length to the command assembly unit 4 when data is to be read out from the transparent file 9 stored in the IC card 2.

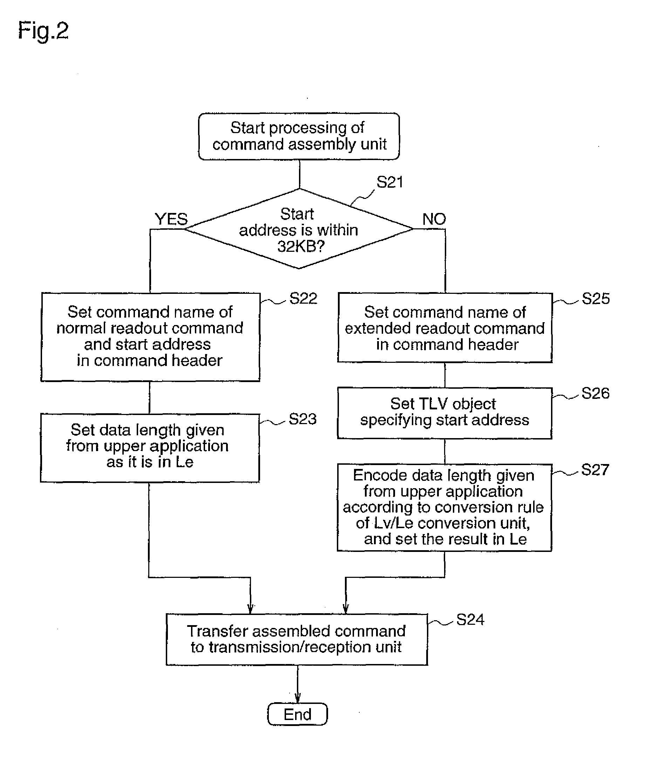

Hereinafter, the processing contents to be performed by the command assembly unit 4 in the terminal 1 will be described with reference to a process flow shown in figure 2. The command assembly unit 4 judges whether the start address given from the upper application 3 is within 32 Kbytes or not (step S21). Since, when the start address is within 32 Kbytes, a normal readout command can be used, the command assembly unit 4 assembles a normal readout command 1500 having the structure shown in figure 15. That is, a command name of the normal readout command and the start address given from the upper application 3 are set in the command header 151 (step S22). Further, the data length given from the upper application 3 is set as it is in the Le 152 (step S23). Thus assembled normal readout command 1500 is sent to the transmission/reception unit 7 (step S24).

On the other hand, the command assembly unit 4 assembles an extended readout command 1700 having the structure shown in figure 17 when the start address indicated from the upper application 3 exceeds 32 Kbytes. That is, a command name of the extended readout command is set in the command header 171 (step S25). Further, the start address given from the upper application 3 is set in the V(Addr) 175, and the length thereof is set in the L 174. A fixed value indicating that this data object specifies a start address is set in the T 173. Further, the length of this TLV object is set in the Lc 172 (step S26).

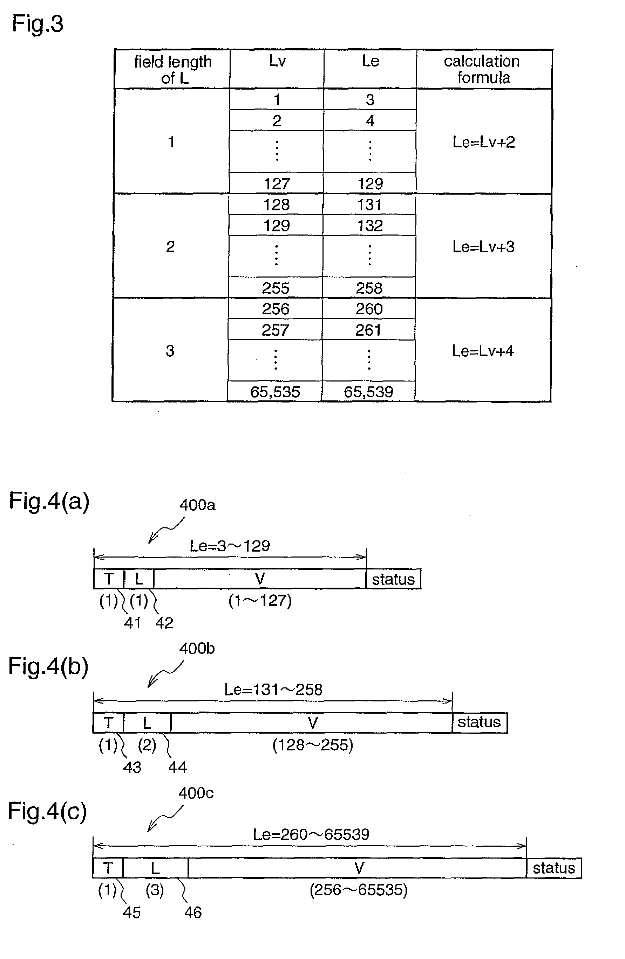

Next, with respect to the Le 176, the Lv/Le conversion unit 5 performs coding according to rules shown in figure 3 (step S27). In figure 3, Lv is the data length given from the upper application 3, and it is a net data length requested by the upper application 3. According to the value of the Lv, the Le is coded according to the rules shown in figure 3. That is, when the Lv is in a range from 1 to 127, since the L 42 is represented by 1 byte in the structure of the response 400a from the IC card 2 shown in figure 4(a), a value obtained by adding 2, with 1 byte of the L 42 being summed with 1 byte of the T 41, to the Lv is set in the Le. Further, when the Lv is in a range from 128 to 255, since the L44 is represented by 2 bytes in the structure of a response 400b from the IC card 2 shown in figure 4(b), a value obtained by adding 3, with 2 bytes of the L 44 being summed with 1 byte of the T 43, to the Lv is set in the Le. Further, when the Lv is in a range from 256 to 65,535, since the L46 is represented by 3 bytes in the structure of a response 400c from the IC card 2 shown in figure 4(c), a value obtained by adding 4, with 3 bytes of the L 46 being summed with 1 byte of the T 45, to the Lv is set in the Le. In this way, a calculation formula according to the value of the Lv is adopted, whereby the value of the Le is uniquely determined.

The command assembly unit 4 sends the extended readout command 1700 which is assembled with the Le 176 being added, to the transmission/reception unit 7 (step 324).

The transmission/reception unit 7 transmits the normal readout command or the extended readout command which is received from the command assembly unit 4, to the transmission/reception unit 13 in the IC card.

On receipt of the command sent from the terminal 1, the transmission/reception unit 13 in the IC card hands over the processing to the command analysis unit 10.

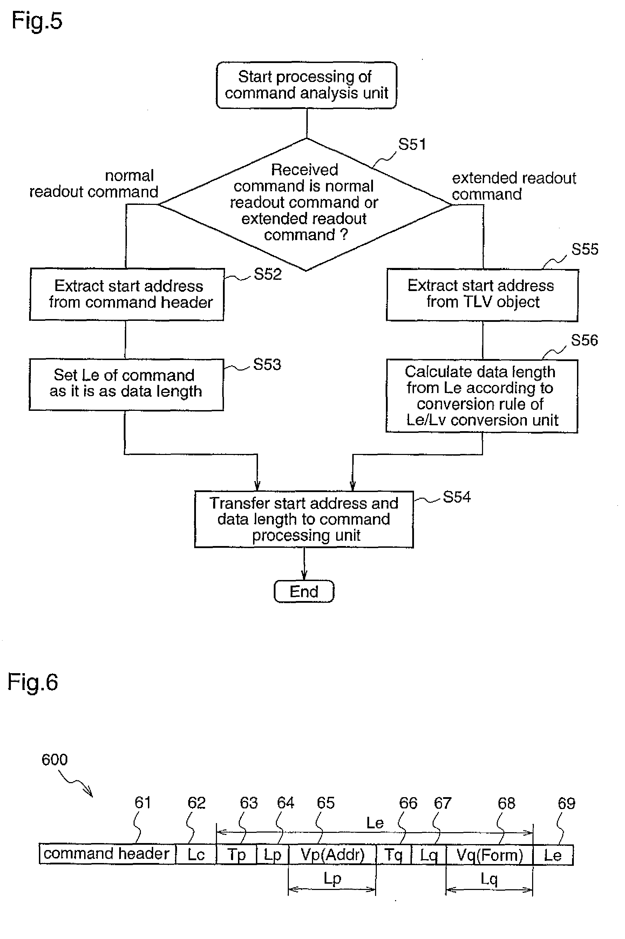

Hereinafter, the processing contents by the command analysis unit 10 according to the first embodiment will be described with reference to the process flow shown in figure 5. The command analysis unit 10 has a function of discriminating the start address and the data length which are requested by the terminal 1. Initially, the command analysis unit 10 refers to the command header of the received command, and judges whether the command is the normal readout command 1500 or the extended readout command 1700, and then branches the processing according to the respective commands (step S51). When the received command is the normal readout command 1500, the command analysis unit 10 extracts the start address from the command header 151, and gives the Le 152 in the command as it is as a data length to the command processing unit 8 (steps S52 to S54).

On the other hand, when the received command is the extended readout command 1700, the command analysis unit 10 extracts the start address from the TLV object 173, 174, and 175 (step S55). With respect to the data length, also the IC card 2, like the terminal 1, has a Le/Lv conversion unit 11 for executing the calculation formula shown in figure 3. The Le/Lv conversion unit 11 executes a calculation that is just inverse to the calculation by the Lv/Le conversion unit 5 in the terminal 1, thereby obtaining the Lv (the net data length requested by the terminal 1) from the Le (step S56). Thus obtained start address and data length are transferred to the command processing unit 8 (step S54).

The command processing unit 8 reads the data from the transparent file 9 according to the given start address and data length, without being conscious of whether the corresponding command is the normal readout command 1500 or the extended readout command 1700, and then gives the read data to the response assembly unit 12.

The response assembly unit 12 has already received the information as to whether the command is the normal readout command 1500 or the extended readout command 1700 from the command analysis unit 10, and assembles a response 1600 or 1800 having the structure shown in figure 16 or 18 according to the information.

The response 1600 or 1800 thus assembled is given to the response analysis unit 6 through the transmission/reception unit 13 of the IC card 2 and the transmission/reception unit 7 of the terminal 1. The response analysis unit 6 has also received the information as to whether the command is the normal readout command 1500 or the extended readout command 1700 from the command assembly unit 4, and analyzes the structure of the response according to the information, and then gives the data to the upper application 3.

In this way, the terminal 1 and the IC card 2 share the conversion rules shown in figure 3, whereby the data of the length requested by the terminal 1 can be reliably read from the transparent file 9 of the IC card 2.

As described above, according to the readout data length specifying method of the first embodiment, since the conversion formula for determining the value of the Le according to the data length requested by the terminal is shared by the terminal and the IC card, the data of the length requested by the terminal can be reliably read out from the IC card.

While a case where the data length can be represented by the Le of 1 byte is assumed in the above description, an extended Le that is encoded to 3 bytes may be used when the data length exceeds 256 bytes.

Further, while it is assumed that the normal readout command 1500 is used when the data length is within 32 Kbytes in the above description, the extended readout command 1700 may be used even when the data length is within 32 Kbytes. In this case, the step of branching the processing according to the type of the command (step S21 or step S51) and the steps relating to the normal readout command (steps S22 and S23, or steps S52 and S53) may be dispensed with.

### (Embodiment 2)

A readout data length specifying method according to a second embodiment is provided by adopting an IC card system of the construction shown in figure 1 as described for the first embodiment, and employing processing contents by the Lv/Le conversion unit 5 and the Le/Lv conversion unit 11 which are different from those of the first embodiment.

While in the first embodiment the conversion formula is changed according to the data length Lv that is requested by the terminal 1, in this second embodiment the conversion formula in the Lv/Le conversion unit 5 and the Le/Lv conversion unit 11 is made constant. For example, as this conversion formula, a calculation formula of Le=Lv+4 which assumes 3 bytes for the field length of the L is always applied, regardless of the value of the Lv. That is, the terminal 1 always calculates the Le by adding 4 to the requested data length Lv, and sends a command in which the Le is set, to the IC card 2. On the other hand, in the IC card 2, a value obtained by subtracting 4 from the Le is always regarded as the data length requested by the terminal 1.

Also in this second embodiment, one conversion rule is shared by the terminal 1 and the IC card 2, and thereby the data of the length requested by the terminal 1 can be reliably read out from the transparent file 9 of the IC card 2, as in the first embodiment. When compared with the first embodiment, the branching depending on the data length becomes unnecessary, whereby the processings by the terminal 1 and the IC card 2 are reduced, resulting in advantages in the processing efficiency and the program size.

As described above, in the readout data length specifying method according to the second embodiment, since the conversion formula for calculating the Le that is shared by the terminal and the IC card is made constant regardless of the readout data length from the terminal, the data of the length requested by the terminal can be reliably and efficiently read out from the IC card.

When the data length to be read out is 255 bytes or less, the L 182 in the response from the IC card 2 can be encoded by 1 to 2 bytes. Further, in the IC card 2, the field length of the L 182 may be variable (1 to 3 bytes) according to the data length, or it may be fixed to 3 bytes. When the field length of the L 182 is 1 to 2 bytes, the data field length (the total length of T 181, L 182, and V 183) in the response becomes shorter than the Le 176 specified by the command. However, since the Le 176 indicates the requested maximum length, the standard of ISO/IEC is satisfied. Furthermore, in either method, the L 182 is encoded according to the rules 1900 shown in figure 19, and therefore, the terminal 1 can know the correct length of the response data.

### (Embodiment 3)

In the above-mentioned second embodiment, when the read data length falls within 256 bytes, a calculation formula Le=Lv+3 which assumes 2 bytes for the field length of the L 182 can be applied. Which one of the calculation formula Le=Lv+4 and the calculation formula Le=Lv+3 is to be applied depends on its application because it depends on how many bytes of data at maximum the application can read out with one command. When the IC card 2 is used for only one application, it is possible to presume a situation where both the terminal 1 and the IC card 2 know which calculation formula is to be applied. However, when the IC card is used in a multi-application environment, it is necessary to provide a means for holding which calculation formula is to be applied, which means is shared between the terminal 1 and the IC card 2.

The readout data length specifying method according to the third embodiment is obtained by specifying which calculation formula is to be used, in the command that is sent from the terminal 1 to the IC card 2 in the readout data length specifying method according to the second embodiment, thereby enabling a correspondence to a multi-application environment.

Hereinafter, the readout data length specifying method according to the third embodiment will be described with reference to figure 6. Figure 6 is a diagram illustrating a structure of an extended readout command 600 used in the readout data length specifying method of the third embodiment.

A command header 61 specifies a command name therein. Lc 62 indicates the total length of subsequent two TLV objects. With respect to the first TLV object, a start address from which reading is to be performed is set in value Vp(Addr) 65, as shown in figure 17. A fixed value indicating that this data object specifies the start address is set in tag Tp 63, and a length of the Vp(Addr) 65 is set in length information Lp 64. The second TLV object shows the characteristics of the third embodiment, and information identifying a calculation formula to be applied is set in value Vq(Form) 68. To be specific, it may be set such that when "01" is set in the value Vq(Form) 68, it is indicated that the calculation formula Le=Lv+3 is adopted (the maximum value of the field length of the L 182 is 2 bytes), when "02" is set, it is indicated that the calculation formula Le=Lv+4 is adopted (the maximum value of the field length of the L 182 is 3 bytes). A fixed value indicating that this data object specifies the calculation formula to be applied is set in tag Tq 66, and a length of the Vq(Form) 68 is set in length information Lq 67. Finally, a value which is calculated from the data length requested by the terminal 1 according to the calculation formula specified in the Vq(Form) 68 is set in Le 69.

According to the readout data length specifying method of the third embodiment, since which one of the plural calculation formulae for calculating the Le is applied can be determined between the terminal 1 and the IC card 2 after communication is started, it is possible to cope with a multi-application environment. Further, it is also possible to cope with a future extension in a single-application.

It is needless to say that the value of the Vq(Form) 68 is merely an example. Further, while in the above description two TLV objects are combined, the present invention is not restricted thereto, and various modifications are possible, such as setting the data of the Vp(Addr) and the Vq(Form) in one TLV. Furthermore, while in this third embodiment the field length of the L 182 in the response data is 3 bytes at maximum, even if the field length of the L should be extended to a larger size in future, it is possible to easily cope with such extension.

Further, while a calculation formula to be applied is specified by the terminal in the above-mentioned readout data length specifying method, the information identifying a calculation formula to be applied may be possessed by the IC card, with the same effects as described above. For example, the information identifying a calculation formula to be applied may be sent from the IC card 2 to the terminal 1 during the initialization processing at the start of communication between the terminal 1 and the IC card 2, or it may be sent from the IC card 2 to the terminal 1 as a response to a specific command.

### (Embodiment 4)

The readout data length specifying method according to the above-mentioned third embodiment is a method in which the information identifying a calculation formula to be applied is shared between the terminal 1 and the IC card 2. As in the third embodiment, it can also be considered that information identifying which one of the methods described for the first embodiment and the second embodiment is applied is shared by the terminal 1 and the IC card 2 using the TLV object. When it is considered limited to only one application, it may be presumed a situation where both the terminal 1 and the IC card 2 know whether the method described for the first embodiment is to be applied or that described for the second embodiment is to be applied. However, when the IC card is used in a multi-application environment, it is necessary to provide a means for holding the information as to which method is to be applied, which means is shared between terminal 1 and the IC card 2. This means also may be required in a situation where a future extension is considered in a single-application environment.

The readout data length specifying method according to the fourth embodiment is a method that specifies which one of the data length specifying methods according to the first embodiment and the second embodiment is to be used in a command that is sent from the terminal 1 to the IC card 2, and performs either of the data length specifying methods according to the first embodiment and the second embodiment between the terminal and the IC card.

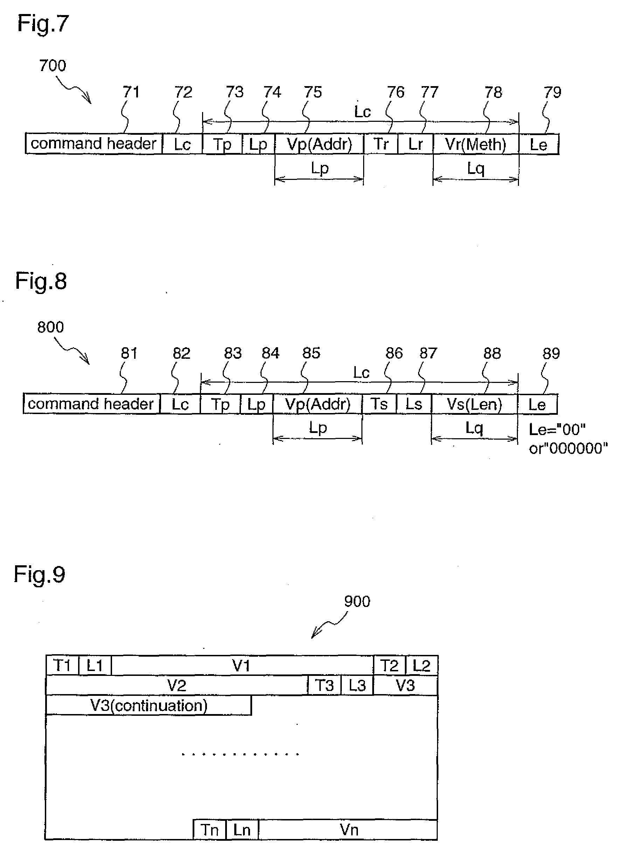

When which one of the method according to the first embodiment (hereinafter referred to as "a first data length specifying method") and the method according to the second embodiment (hereinafter referred to as "a second data length specifying method") should be applied is specified in a command that is sent from the terminal 1 to the IC card 2, a modification 700 of the extended readout command 600 shown in figure 6 can be used as shown in figure 7. In figure 7, a TLV object (Tr76/Lr77/Vr78) for identifying a method to be applied is used instead of the TLV object (Tq66/Lq67/Vq68) of the Vq(Form) shown in figure 6. To be specific, it may be set such that when "01" is set in the value Vr(Meth) 78, it is indicated that the first data length specifying method is adopted, and when "02" is set, it is indicated that the second data length specifying method is adopted. A fixed value indicating that this data object specifies a method to be applied is set in the tag Tr 76, and a length of the Vr(Meth) 78 is set in the length information Lr 77. Finally, a value which is calculated from the data length requested by the terminal 1 according to the applied method is set in the Le 79.

According to the readout data length specifying method of this fourth embodiment, since which one of the first data length specifying method and the second data length specifying method should be applied can be determined between the terminal 1 and the IC card 2 after the start of communication therebetween, it is possible to execute either of the first data length specifying method or the second data length specifying method under the multi-application environment. Further, it is also possible to cope with a future extension in a single-application.

The readout data length specifying method that is identified by the Vr(Meth) 78 is not restricted to that mentioned above, and any of various kinds of readout data specifying methods which are obtained by combining the fourth embodiment and the third embodiment may be identified. For example, it may be set such that when "01" is set in the value Vr(Meth), it is indicated that the first data length specifying method is adopted, when "02" is set, it is indicated that the second data length specifying method is adopted with the calculation formula Le=Lv+3 applied, when "03" is set, it is indicated that the second data length specifying method is adopted with the calculation formula Le=Lv+4 applied.

Alternatively, it may be set such that when the TLV object of the Vq(Form) is included in the command, it is indicated that the second data length specifying method is adopted with a calculation formula applied being determined by the value of the Vq(Form), and when the TLV object of the Vr(Meth) is included in the command, it is indicated that the first data length specifying method is adopted (in this case, the value of the Vr(Meth) itself has no meaning). In this case, if neither the TLV object of the Vq(Form) nor the TLV object of the Vr(Meth) is included or both of them are included, it is recognized as an error.

Further, the IC card 2 may have the information identifying a method to be applied as in the third embodiment. This ID information may be sent from the IC card 2 to the terminal 1 as an initialization processing at start of communication between the terminal 1 and the IC card 2 or as a response to a specific command.

### (Embodiment 5)

A readout data length specifying method according to a fifth embodiment is a method which clearly specifies a net data length Lv that is requested by the terminal in a field other than the Le in the command. This method can use a modification 800 of the extended readout command 600 shown in figure 6, as shown in figure 8. In figure 8, a TLV object (Ts86/Ls87/Vs88) for specifying a net data length Lv is used instead of the TLV object (Tq66/Lq67/Vq68) of the Vq(Form) shown in figure 6. To be specific, the Lv is set as it is in the Vs(Len) 88. A fixed value indicating that this data object specifies the Lv is set in the tag Ts 86, and a length of the Vs(Len) 88 is set in the length information Ls 87.

In this fifth embodiment, since the data length requested by the terminal is indicated by the Vs(Len) 88, the Le 89 has no important meaning. However, since it is ruled in the standard of ISO/IEC that the maximum length requested by the terminal should be set in the Le 89, an appropriate value must be set. Although a value obtained by adding 4 to the value of the Vs(Len) 88 may be set, it is more preferable to set "00" indicating the maximum length. In this case, it becomes unnecessary to perform calculation such as addition of 4 to the value of the Vs(Len) 88, whereby the processing is simplified. Since only 256 bytes at maximum can be returned when "00" is set, a maximum length "000000" (3 bytes) of the extended Le should be set if there is a possibility that the data exceeds 256 bytes.

According to the data length specifying method of the fifth embodiment, since the IC card can definitely know the net data length requested by the terminal, the data of the length requested by the terminal can be reliably read out from the transparent file of the IC card. Further, since, in this method, all the necessary information in the form of commands can be explicitly transferred from the terminal to the IC card, it is possible to cope with a multi-application environment as well as a future extension in a single application.

### (Embodiment 6)

A readout data length specifying method according to a sixth embodiment is a method which clearly specifies a net data length Lv that is requested by the terminal in a field other than the Le in the command when the data itself stored in the transparent file has a TLV structure as shown in figure 9.

In a transparent file 900 used in the readout data length specifying method according to the sixth embodiment shown in figure 9, n pieces of TLV objects (T1/L1/V1 to Tn/Ln/Vn) are stored.

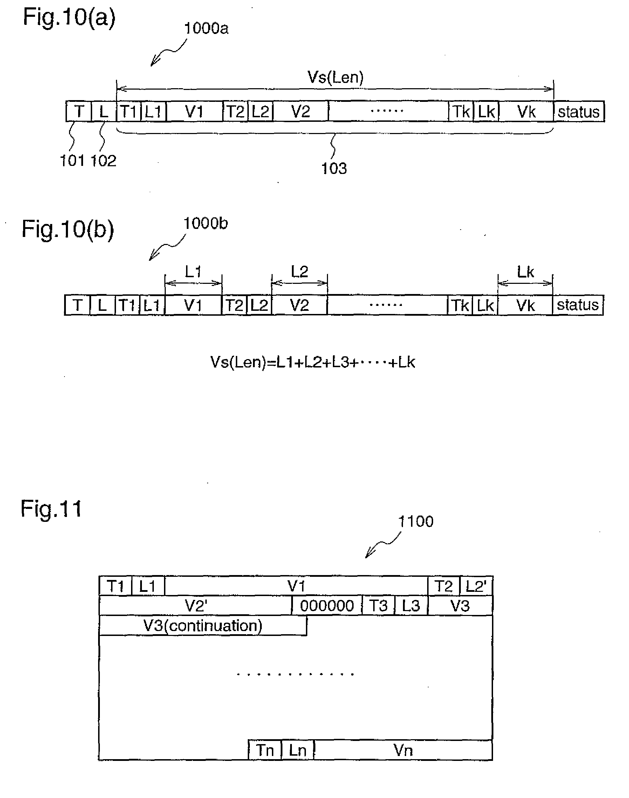

When data are read out of the transparent file 900, the structure of a response 1000a according to the sixth embodiment becomes as shown in figure 10(a). The response 1000a shown in figure 10(a) indicates a case where the Lv having a length corresponding to k pieces of TLV objects (T1/L1/V1 to Tk/Lk/Vk) 103 is specified by the Vs(Len) 88 shown in figure 8. In this case, the response 1000a has a nested structure having duplicated TLV structures (i.e., having a TLV structure comprising T 101, L 102, and a value part, and having TLV structures of T1/L1/V1 to Tk/Lk/Vk in that value part). The tag T 101 shows a fixed value indicating that this data object is readout data and that a nested structure is provided. The length information L 102 indicates a total length of the subsequent k pieces of TLV objects. T1/L1/V1 to Tk/Lk/Vk 103 are data read from the transparent file in the IC card.

When the respective length information for the plural TLV objects stored in the transparent file in the IC card are represented by 1 byte, this method has no problem. However, if some of the length information are extended to 2 bytes (or 3 bytes) and the terminal, without recognizing this fact, specifies the Vs(Len) 88 on an assumption that every length information is of 1 byte, the IC card cannot return response data exceeding the length that is specified by the Vs(Len) 88, and therefore, a last part of the k pieces of TLV objects is undesirably lost by an amount corresponding to a part of the L1, L2, ..., Lk being extended.

In order to solve this problem, this sixth embodiment adopts a method of setting a value obtained by adding only the length information of the respective TLV objects in the Vs(Len) 88 (i.e., Vs(Len) = L1+L2+L3+ ... +Lk) as shown in figure 10(b).

Thereby, the terminal is operated to request the total of only the net data lengths without being conscious of whether the length information of the respective TLV objects in the transparent file in the IC card are extended or not, and thereby the data of the length requested by the terminal can be reliably read out. On the other hand, it is easy for the IC card to perform a processing of adding only the V parts of the respective TLV objects, and returning data up to a position that reaches the Vs(Len) as response data.

### (Embodiment 7)

A readout data length specifying method according to a seventh embodiment of the present invention is a method which clearly specifies a net data length Lv that is requested by the terminal in a field other than the Le in the command, in a case where a part of the TLV objects stored in the transparent file is rewritten in the sixth embodiment.

Figure 11 shows a transparent file 1100 in the case where a second TLV object is rewritten. In the transparent file 1100, while the tag T2 is not rewritten, the V2 is rewritten to V2' having a length shorter than the original data, and accompanying therewith, the length information is also rewritten to L2' that indicates the length of the V2'. A vacant area that is generated due to the rewriting to the shorter length is filled with "00". Since the "00" is a value that cannot be used as a tag, the IC card can recognize that the area filled with the "00" is a vacant area.

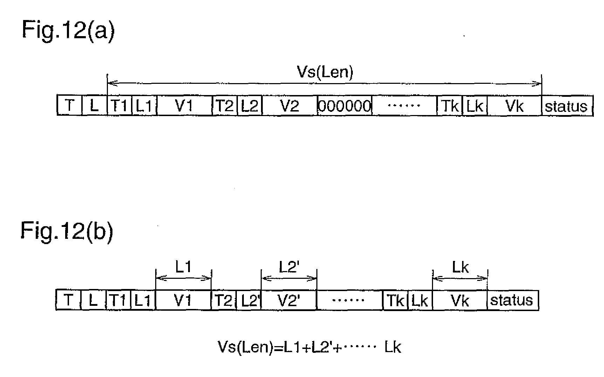

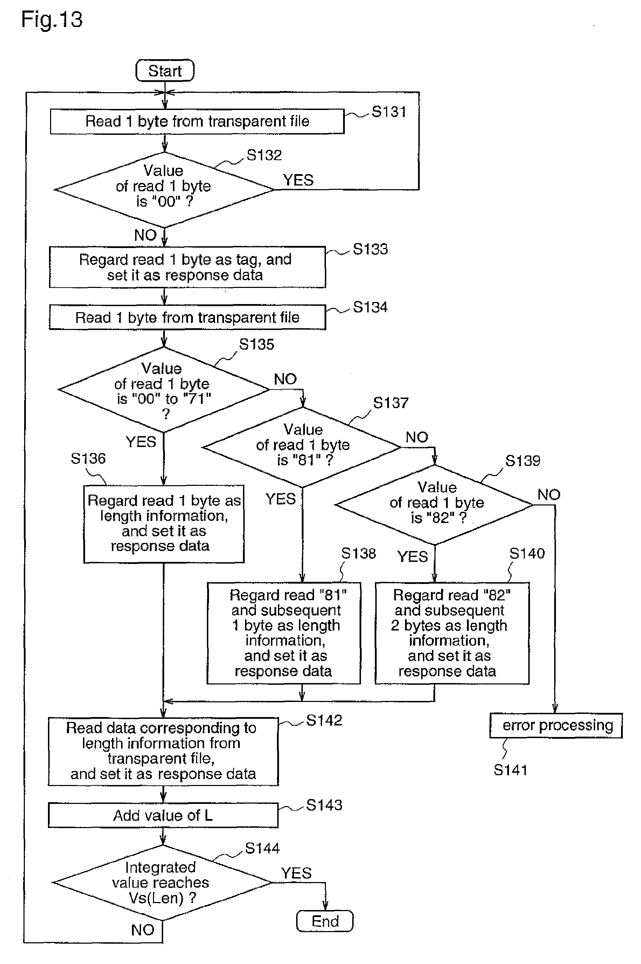

When data are read out from the transparent file 1100, two types of response structures can be considered in this seventh embodiment. The first structure is shown in figure 12(a), where the total length including the tag, the length information, and the vacant area which are stored in the transparent file is specified as the Vs(Len) 88. The second structure is shown in figure 12(b), wherein the total of only the net data lengths is specified as the Vs(Len) 88. In this case, the IC card judges the "00" as a vacant area, and deletes it from the response data. This processing by the IC card will be described with reference to a flowchart shown in figure 13. Figure 13 shows an assembly of response data according to this seventh embodiment.

Initially, the IC card reads out 1 byte from the transparent file 1100 (step S131), and checks whether the data is "00" or not (step S132). When the data is "00", the IC card regards the data not as a tag but as a vacant area, and reads next 1 byte. While "00" continues, the read data are skipped as vacant areas. On the other hand, when the data is other than "00", the IC card regards the byte as a tag, and sets it as response data (step 5133). Thereafter, the IC card reads out next 1 byte which is length information (step S134), and performs processing according to the rules shown in figure 19. That is, when the 1 byte is within a range from "00" to "7f" (step S135), the IC card regards the data as length information represented by 1 byte, and sets the 1 byte in the response data (step S136). When the 1 byte is "81" (step S137), the IC card regards the subsequent 1 byte as length information, and sets the "81" and the subsequent 1 byte in the response data (step S138). Likewise, when the 1 byte is "82" (step S139), the IC card regards the subsequent 2 bytes as length information, and sets the "82" and the subsequent 2 bytes in the response data (step 5140). If the 1 byte is a value other than mentioned above, an error processing is performed (step S141). Next, the IC card reads out data corresponding to the subsequent length information from the transparent file 1100, and sets it in the response data (step S142).

After the one TLV object is thus set as the response data, the IC card adds the value of the L of the TLV object (step S143), and checks whether the accumulated value up to then has reached the Vs(Len) or not (step S144). When the accumulated value has not yet reached the Vs(Len), the IC card proceeds to reading of the next TLV object and performs the same processing as mentioned above. On the other hand, when the accumulated value has reached the Vs(Len), the IC card judges that reading of the data length requested by the terminal has completed, and terminates the processing.

As described above, according to the readout data length specifying method of the seventh embodiment, the terminal can request the total of only the net data lengths without being conscious of whether the length information of each TLV object in the transparent file in the IC card is extended or not, and further, data "00" of a vacant area that is not required by the terminal is deleted from the response data, whereby a highly efficient transmission can be carried out.

### APPLICABILITY IN INDUSTRY

The method according to the present invention is applicable to a system using an IC card having a large-capacity transparent file.

## Claims

1. A method for specifying a readout data length when reading data from a file in an IC card in response to a request from a terminal, wherein:
when a response from the IC card has a TLV structure and a field length of the L in the TLV structure is variable, said terminal selects a calculation formula from among plural calculation formulae according to a data length that is requested, and converts the data length according to the selected calculation formula, and informs the converted value to the IC card; and
said IC card selects a calculation formula from among plural calculation formulae that are paired with the respective calculation formulae possessed by the terminal in accordance with the converted value, and calculates the data length from the converted value in accordance with the selected calculation formula.

2. A method for specifying a readout data length when reading data from a file in an IC card in response to a request from a terminal, wherein:
when a response from the IC card has a TLV structure and a field length of the L in the TLV structure is variable, said terminal adds a maximum value of the field length of the L to a data length that is requested, and informs the added value to the IC card; and
said IC card subtracts the maximum value from the added value to derive the data length.

3. A readout data length specifying method as defined in Claim 2 wherein said IC card surely encodes the field of the L using the maximum length.

4. A readout data length specifying method as defined in Claim 2 wherein said IC card encodes the field of the L with a variable length according to the length of the data.

5. A readout data length specifying method as defined in Claim 2 wherein either of the terminal or the IC card informs the maximum value to the other.

6. A method for specifying a readout data length when reading out data from a file in an IC card in response to a request from a terminal, wherein:
there are provided a first readout data length specifying method in which, when a response from the IC card has a TLV structure and a field length of the L in the TLV structure is variable, said terminal selects a calculation formula from among plural calculation formulae according to a data length that is requested, converts the data length according to the selected calculation formula, and informs the converted value to the IC card, and said IC card selects a calculation formula from among plural calculation formulae that are paired with the respective calculation formulae possessed by the terminal in accordance with the converted value, and calculates the data length from the converted value in accordance with the selected calculation formula, and
a second readout data length specifying method in which, when a response from the IC card has a TLV structure and a field length of the L in the TLV structure is variable, said terminal adds a maximum value of the field length of the L to a data length that is requested, and informs the added value to the IC card, and said IC card subtracts the maximum value from the added value to derive the data length, and
either of the terminal or the IC card notifies the other of information identifying which of the first readout data length specifying method and the second readout data length specifying method is applied, and the readout data length specifying method that is adopted between the terminal and the IC card is changed according to the information.

7. A method for specifying a readout data length when reading data from a file in an IC card in response to a request from a terminal, wherein:
when a response from the IC card has a TLV structure and a field length of the L in the TLV structure is variable, a command from the terminal to the IC card has a first field and a second field, and the terminal specifies a maximum length of a data field of a response from the IC card in the first field, and specifies the data length that is requested in the second field.

8. A readout data length specifying method as defined in Claim 7 wherein, when the data stored in the file has a first TLV structure and the response from the IC card has a second TLV structure having a format including the data of the first TLV structure nested therein, an accumulated value of the L in the first TLV structure is specified in the second field.

9. A readout data length specifying method as defined in Claim 8 wherein, in a case where the file has a vacant area, the IC card skips reading of this vacant area when generating a response.
